# DEMANDE DE BREVET EUROPEEN

(11) **EP 2 930 054 A1**
(43) Date de publication de la demande: **14.10.2015**
(21) Numéro de dépôt: 15161130.8
(22) Date de dépôt: 26.03.2015
(51) Int. Cl.: B60N 2/015, B64D 11/06, B60N 2/24

(54) **Système de fixation d'un objet dans un rail d'un support**

(30) Priorité: 07.04.2014 FR 1453054
(71) Demandeur: Attax, 78420 Carrières sur Seine (FR)
(72) Inventeur: Danet, Romain, 78600 Maisons-Laffitte (FR)
(74) Mandataire: Blot, Philippe Robert Emile

(57) **Abrégé**

Ce système de fixation d'un objet dans un rail d'un support du type comportant une embase (1) destinée à être en appui sur le rail et comportant des moyens en forme de mors de serrage (2) de celle-ci sur le rail comportant des moyens à vis/écrou de serrage/desserrage de celle-ci sur le rail, présentant à une extrémité des moyens de manoeuvre par un opérateur pour serrer/desserrer le système, est caractérisé en ce que les moyens de manoeuvre comportent un levier (5) déplaçable entre une position escamotée de rangement et une position active permettant à l'opérateur de serrer/desserrer le système.

## Description

La présente invention concerne un système de fixation d'un objet dans un rail d'un support.

De tels systèmes de fixation ont par exemple déjà été utilisés pour fixer des objets tels que des sièges ou autres sur ou dans des rails d'un support constitué par exemple par un plancher d'aéronef, de véhicule automobile, etc.

D'une façon générale, de tels dispositifs comportent par exemple une embase destinée à être posée ou à être en appui sur ou sous le rail et qui comporte des moyens à vis/écrou de serrage de celle-ci sur le rail afin de bloquer l'objet en position.

Ainsi par exemple ces moyens à vis/écrou comportent une tige associée à une pièce filetée ou filetée elle-même, engagée dans un trou taraudé de l'embase et qui comporte à une extrémité des moyens en forme de talon de serrage destinés à être placés sous le rail pour serrer celui-ci entre ce talon et l'embase et à une autre extrémité des moyens de manoeuvre de cette tige pour permettre son serrage ou son desserrage par exemple par un opérateur.

Ces moyens de manoeuvre comportent par exemple des portions en saillie latérales ou encore une empreinte d'un outil, permettant à un opérateur de serrer ou de desserrer manuellement le système.

Cependant tous ces systèmes présentent un certain nombre d'inconvénients au niveau des risques de désolidarisation de l'ensemble en raison par exemple de fausses manipulations ou encore des vibrations rencontrées dans ce type d'applications.

De plus, ces systèmes sont relativement difficiles à manoeuvrer.

Le but de l'invention est donc de résoudre ces problèmes.

A cet effet l'invention a pour objet un système de fixation d'un objet dans un rail d'un support du type comportant une embase destinée à être en appui sur le rail et comportant des moyens en forme de mors de serrage de celle-ci sur le rail comportant des moyens à vis/écrou de serrage/desserrage de celle-ci sur le rail, présentant à une extrémité des moyens de manoeuvre par un opérateur pour serrer/desserrer le système, caractérisé en ce que les moyens de manoeuvre comportent un levier déplaçable entre une position escamotée de rangement et une position active permettant à l'opérateur de serrer/desserrer le système.

Suivant d'autres caractéristiques du système selon l'invention prises seules ou en combinaison :
- le levier comporte à une extrémité une chape articulée à l'extrémité d'une tige de serrage/desserrage des moyens en forme de mors ;
- les moyens d'articulation autorisent un débattement angulaire déterminé du levier par rapport à la tige de serrage/desserrage ;
- la chape comporte une portion taraudée adaptée pour coopérer avec les extrémités d'une tige d'articulation traversant la tige de de serrage/desserrage ;
- la portion taraudée de la chape présente un pas différent et inverse de celui d'une portion taraudée des moyens à vis/écrou.

L'invention a également pour objet un ensemble comprenant un système de fixation précédemment décrit et un rail apte à être assemblé audit système de fixation et à un support.

L'invention a également pour objet un ensemble comprenant un système de fixation précédemment décrit et un objet apte à être fixé à un support par ledit système, l'objet étant un siège.

L'invention a également pour objet un ensemble comprenant un système de fixation précédemment décrit, un rail apte à être assemblé audit système de fixation et un support assemblé audit rail, le support étant un plancher d'aéronef. L'invention sera mieux comprise à l'aide de la description qui va suivre donnée uniquement à titre d'exemple et faite en se référant aux dessins annexés, sur lesquels :
- les figures 1 et 2 représentent des vues en perspective d'un système de fixation selon un mode de réalisation de l'invention, dans lesquelles un levier de manoeuvre est représenté respectivement en position escamotée de rangement et de verrouillage/blocage et en position active de serrage/desserrage du système par un opérateur,
- la figure 3 représente une vue en bout du système de la figure 1, illustrant la mise en place de celui-ci dans un rail d'un support, et
- la figure 4 représente une vue en coupe du système des figures 1 et 2, illustrant la structure et le fonctionnement d'un tel système.

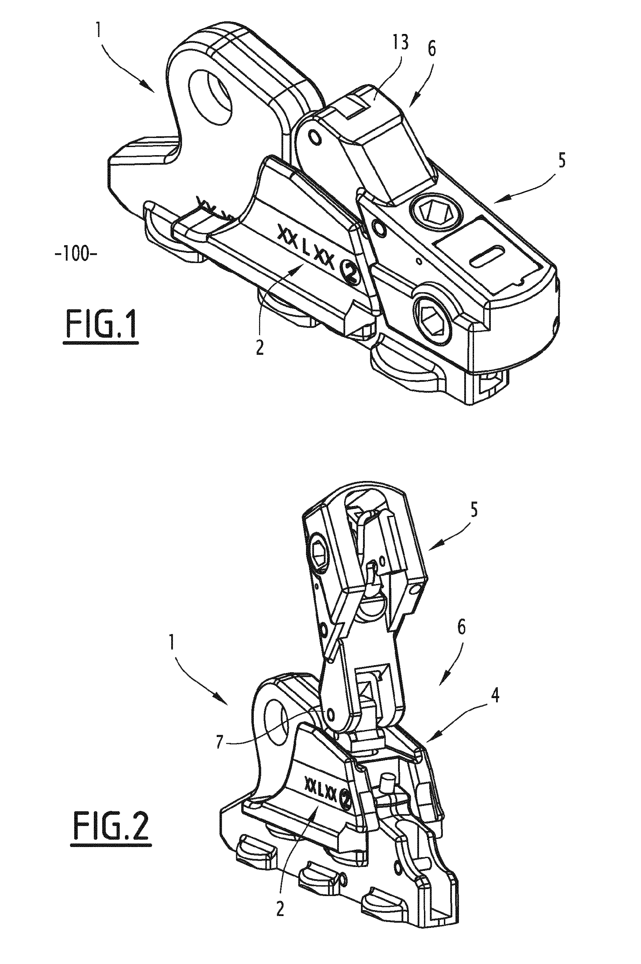

Les figures 1 à 3 représentent un système 100 de fixation d'un objet sur un rail d'un support.

L'objet est par exemple constitué par un siège d'aéronef ou tout autre objet destiné à être fixé sur le plancher de celui-ci.

Bien entendu d'autres supports peuvent être envisagés, tels qu'un plancher de véhicule automobile.

Le système de fixation 100 comporte une embase 1 sur laquelle est monté un mors de serrage 2.

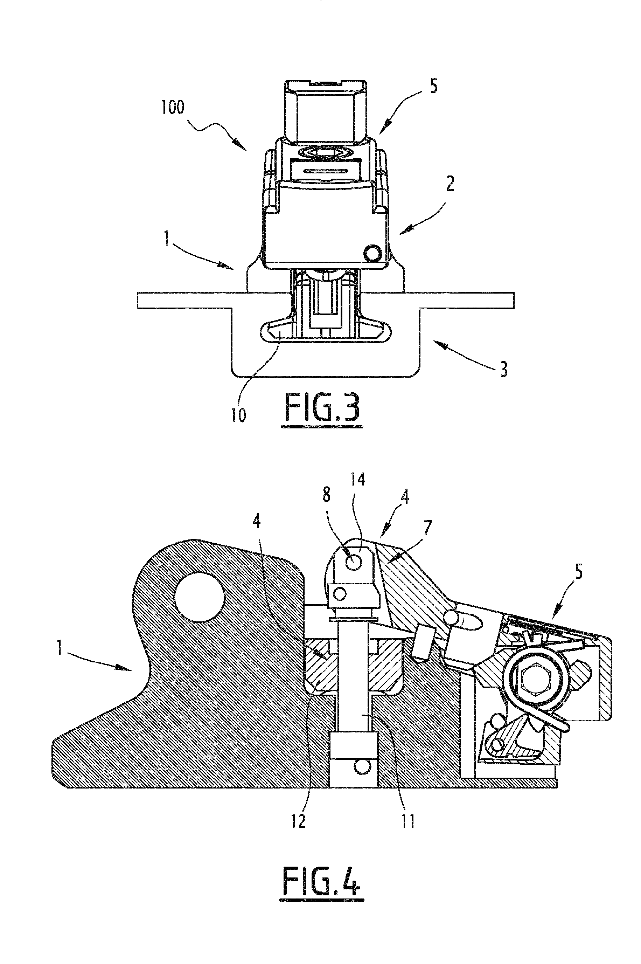

Comme illustré sur la figure 3, le mors de serrage 2 permet de serrer le système de fixation 100 sur un rail 3, par serrage du mors 2 contre le rail 3. L'embase 1 comporte des portions 10 en forme de talon de serrage, adaptées pour s'engager dans le rail 3 et pour venir en appui sur celui-ci.

En position de serrage du système, le rail 3 est alors pincé entre les talons 10 de l'embase et le mors 2.

Des moyens à vis/écrou 4 sont préférentiellement interposés entre l'embase 1 et le mors de serrage 2. Comme illustré sur la figure 4, les moyens à vis/écrou 4 comprennent par exemple une tige filetée 11 formant vis et une portion taraudée 12 formant écrou.

Les moyens à vis/écrou 4 sont manoeuvrables par un opérateur par l'intermédiaire d'un levier de manoeuvre 5. Une extrémité 13 du levier 5 est assemblée à une extrémité 14 de la vis 11.

Le levier 5 est déplaçable par pivotement entre une position escamotée de rangement et une position active de manoeuvre par l'opérateur, illustrées respectivement sur les figures 1 et 2.

En position escamotée de rangement, le levier 5 est bloqué en position. En position active, l'opérateur peut saisir ce levier et le tourner dans un sens ou dans l'autre pour manoeuvrer les moyens 4 à vis/écrou. L'opérateur peut ainsi serrer ou desserrer le mors 2 sur l'embase 1.

En position escamotée de rangement, le levier 5 est par exemple bloqué en position par l'intermédiaire d'un crochet, de façon classique et connue par ailleurs.

A son extrémité 13 associée à la vis 11, le levier 5 est par exemple équipé d'une chape d'articulation 6 sur l'extrémité correspondante 14 de la vis 11.

La chape 6 autorise un certain débattement angulaire du levier 5 par rapport à l'extrémité 14 de la tige formant vis 11. Cela permet à l'opérateur, dans un premier temps de serrer le système 100, puis dans un second temps d'orienter le levier 5 en position angulaire correcte pour le placer en position escamotée et de verrouillage.

Ce débattement angulaire, ou course morte ou libre, est indispensable : en fonction du serrage du mors 2 contre le rail 3, le levier 5 peut ne pas se trouver dans la position angulaire illustrée sur les figures 1 et 2, permettant à l'opérateur de déplacer ledit levier vers sa position escamotée de rangement.

Le débattement angulaire possible entre le levier 5 et l'extrémité 14 de la tige permet de résoudre ce problème.

Des moyens autorisant ce débattement angulaire sont formés par une portion taraudée 7 dans la chape 6, cette portion taraudée 7 étant adaptée pour coopérer avec les extrémités d'une tige d'articulation 8. La tige d'articulation 8 traverse l'extrémité 14 de la tige filetée 11 formant vis.

Le pas de cette portion taraudée 7 de la chape 6 peut être différent et inverse de celui de la portion taraudée 12 des moyens 4 de serrage du mors 2 sur l'embase 1.

Lorsque l'opérateur souhaite serrer ou desserrerle mors 2, il doit tout d'abord faire tourner le levier 5 par rapport à la tige 6 pour parcourir cette course dite libre ou morte avant d'amener le levier en position de butée. L'opérateur peut alors agir sur la tige 11 des moyens 4 de serrage/desserrage.

Une fois le mors 2 en position de serrage et le rail 3 pincé entre le mors 2 et l'embase 1, le système 100 et donc l'objet tel que le siège sont bloqués en position sur le plancher. L'opérateur peut alors ramener le levier 5 vers la position angulaire escamotée de rangement et de verrouillage.

Bien entendu d'autres modes de réalisation peuvent être envisagés.

## Revendications

1. Système (100) de fixation d'un objet dans un rail (3) d'un support, comportant une embase (1) destinée à être en appui sur le rail, ladite embase comportant des moyens en forme de mors de serrage (2) de celle-ci sur le rail, le système comportant en outre des moyens à vis/écrou (4) de serrage/desserrage de l'embase sur le rail, les moyens à vis/écrou présentant à une extrémité (14) des moyens de manoeuvre (5) par un opérateur pour serrer/desserrer le système,
**caractérisé en ce que** les moyens de manoeuvre comportent un levier (5) déplaçable entre une position escamotée de rangement et une position active permettant à l'opérateur de serrer/desserrer le système.

2. Système de fixation selon la revendication 1, **caractérisé en ce que** le levier (5) comporte à une extrémité (13) une chape (6) articulée à l'extrémité d'une tige (11) de serrage/desserrage des moyens en forme de mors.

3. Système de fixation selon la revendication 2, **caractérisé en ce que** la chape articulée (6) autorise un débattement angulaire déterminé du levier (5) par rapport à la tige (11) de serrage/desserrage.

4. Système de fixation selon la revendication 3, **caractérisé en ce que** la chape (6) comporte une portion taraudée (7) adaptée pour coopérer avec les extrémités d'une tige d'articulation (8) traversant la tige (11) de de serrage/desserrage.

5. Système de fixation selon la revendication 4, **caractérisé en ce que** la portion taraudée (7) de la chape (6) présente un pas différent et inverse de celui d'une portion taraudée (12) des moyens à vis/écrou.

6. Ensemble comprenant un système de fixation (100) selon l'une des revendications précédentes et un rail (3) apte à être assemblé audit système de fixation et à un support.

7. Ensemble comprenant un système de fixation (100) selon l'une des revendications 1 à 5 et un objet apte à être fixé à un support par ledit système, l'objet étant un siège.

8. Ensemble comprenant un système de fixation (100) selon l'une des revendications 1 à 5, un rail (3) apte à être assemblé audit système de fixation et un support assemblé audit rail, le support étant un plancher d'aéronef.
